# EUROPEAN PATENT APPLICATION

(11) **EP 1 755 341 A1**
(43) Date of publication of application: **21.02.2007**
(21) Application number: 05291761.4
(22) Date of filing: 19.08.2005
(51) Int. Cl.: H04N 7/26

(54) **Method of quantization of transform coefficients**

(71) Applicant: TEXAS INSTRUMENTS INCORPORATED, Dallas, Texas 75265 (US); TEXAS INSTRUMENTS FRANCE, 06271 Villeneuve Loubet Cedex, Nice (FR)
(72) Inventor: Lafon, Philippe Jean-Marcel, 06800 Cagnes sur Mer (FR)
(74) Representative: Holt, Michael

(57) **Abstract**

Systems and methods for quantization are provided. Some embodiments provide a system and method for quantization comprising preprocessing the transform coefficients to predict one or more non-zero coefficients and one or more zero coefficients as well as predict the non-existence of non-zero and zero coefficients (100, 102, and 104), storing indices representing the predicted non-zero coefficients (106), and performing a quantization process on the predicted non-zero coefficients, as well as the inverse quantization process of those non-zero quantized coefficients (110).

## Description

### BACKGROUND OF THE INVENTION

New generation multimedia wireless products now offer picture and video capture as well as compression capabilities. Because embedded systems in such products have limited resources, processes should be designed efficiently, including processes which implement video and image compression.

Video/Image compression algorithms such as, for example, JPEG, MPEG-1, MPEG-2, MPEG-4, H263 and others, use quantization to allow bit rate reduction and control. Quantization is a lossy stage of video and image compression that processes transformed coefficients (typically resulting from a Discrete Cosine Transform or "DCT"), reduces their precision, and zeros out a significant percentage of the coefficients representing the lossy portion of the algorithm. Inverse quantization is the process for reconstructing the magnitude of the remaining coefficients that are not zeroed out. Subsequent entropy coding (Variable Length Coding or "VLC") occurs on the quantized coefficients and results in two events: non-zero coefficient values (LEVELs) and the number of zero coefficients occurring between those coefficients (RUNs).

Many of the compression algorithms mentioned above implement quantization/inverse quantization on blocks of coefficients where the calculation cost (in terms of calculations per second) is generally the same for each coefficient. The more refined algorithms save some calculations during inverse quantization by recording the last non-zero quantized coefficient. The overall quantization cost, in terms of operations, may represent as much as 20% of the total number of calculations required to compress the data.

DCT is a transform coding algorithm that is widely used for lossy data compression. It is similar to the discrete Fourier transform, but uses only real numbers. Each component of an image is tiled into sections of 8x8 pixels, and then each tile is converted to frequency space using DCT. In other words, DCT converts data (pixels, waveforms, etc.) into sets of frequencies, and provides an 8x8 transform coefficient array, or other data structure capable of representing the set of frequencies. This transform generates coefficients representing the average value in each block and higher frequency changes within the block. In quantization, the high-frequency information may be stripped away, and the more meaningful low-frequency information remains. DCT is typically the transform used to compress JPEG, MPEG, DV, and H.263 frames, wherein the 8x8 block is computed, and then quantized and entropy coded. In many quantization algorithms, each component in the frequency domain is divided by a constant for that component and then rounded to the nearest integer. As a result of this division, many of the higher frequency components are rounded to zero, or small positive or negative numbers. Other transform coding algorithms that work similarly and may be used in lossy data compression include the Fourier transform or wavelet transform.

Most algorithms perform quantization and inverse quantization on all of the coefficients resulting from transform coding, and inverse quantization occurs on each zero in between each of the non-zero quantized coefficients. Because quantization and inverse quantization are very costly in terms of calculations required, there is a need to minimize these calculations to improve resource utilization and reduce power consumption.

### SUMMARY OF THE INVENTION

Systems and methods for data compression are provided. Some embodiments provide a method for data compression comprising preprocessing the transform coefficients to predict one or more non-zero coefficients and one or more zero coefficients or to predict the non-existence of non-zero or zero coefficients, and performing a quantization and inverse quantization process on the predicted non-zero coefficients.

Other embodiments provide a system for compression comprising a codec configured to preprocess the transform coefficients to identify one or more non-zero coefficients and one or more zero coefficients or to predict the non-existence of non-zero or zero coefficients and perform a quantization and inverse quantization process on the non-zero coefficients.

In some embodiments, a system is provided comprising a processor, a memory device, and a compression component configured to preprocess the transform coefficients to identify one or more non-zero coefficients and one or more zero coefficients or to predict the non-existence of non-zero or zero coefficients, and perform a quantization and inverse quantization process on the non-zero coefficients.

These and other features and advantages will be more clearly understood from the following detailed description taken in conjunction with the accompanying drawings and claims.

### NOTATION AND NOMENCLATURE

Certain terms are used throughout the following description and claims to refer to particular system components. As one skilled in the art will appreciate, various companies may refer to a component by different names. This document does not intend to distinguish between components that differ in name but not function. In the following discussion and in the claims, the terms "including" and "comprising" are used in an openended fashion, and thus should be interpreted to mean "including, but not limited to." Also, the term "couple" or "couples" is intended to mean either an indirect or direct connection. Thus, if a first device couples to a second device, that connection may be through a direct connection, or through an indirect connection via other devices and connections. The term "system" refers broadly to a collection of two or more components and may be used to refer to an overall system as well as a subsystem within the context of a larger system.

### BRIEF DESCRIPTION OF THE DRAWINGS

For a more detailed description of embodiments of the present invention, reference will now be made to the accompanying drawings, wherein:
FIG. 1 shows a flow graph of a method for increasing the efficiency of video and picture compression in accordance with one or more embodiments;
FIG. 2 illustrates pseudo-code implementing a method for increasing the efficiency of video and picture compression in accordance with one or more embodiments;
FIG. 3A shows an illustrative architecture for a mobile device in accordance with one or more embodiments; and
FIG. 3B shows a schematic block diagram of a subsystem of a mobile device in accordance with one or more embodiments.

### DESCRIPTION OF SPECIFIC EMBODIMENTS OF THE INVENTION

The following discussion is directed to various embodiments of the invention. Although one or more of these embodiments may be preferred, the embodiments disclosed should not be interpreted, or otherwise used, as limiting the scope of the disclosure, including the claims, unless otherwise specified. In addition, one skilled in the art will understand that the following description has broad application, and the discussion of any embodiment is meant only to be exemplary of that embodiment, and not intended to intimate that the scope of the disclosure, including the claims, is limited to that embodiment.

Embodiments of the present invention minimize the number of calculations required to compress data by inserting a pre-processing phase after transform coding and before the quantizer. The pre-processing phase involves predicting which of the transform coefficients will be zero, and not quantizing or inverse quantizing the zero coefficients. It is possible to predict when a coefficient divided by a quantized number will have a null result based on a comparison of the coefficient with a threshold value derived from the actual quantization value. Based on the predictions, a list or other data structure may be populated with indices representing only the non-zero coefficients to be quantized. This process of prediction allows the quantization stage to be applied only to a reduced set of coefficients, thereby reducing the number of operations required for data compression.

Efficient video/image compression results in part because the quantization process introduces a large majority of zero coefficients. Even with high bit rate coding, many coefficients are quantized to zero, meaning that with pre-processing, such coefficients can be zeroed out, not requiring MIPS-intensive quantization. With low bit rate coding, on average only a few non-zero symbols per block of 64 coefficients are generated. Therefore, a significant gain can be reached if the zeros are produced with fewer calculations.

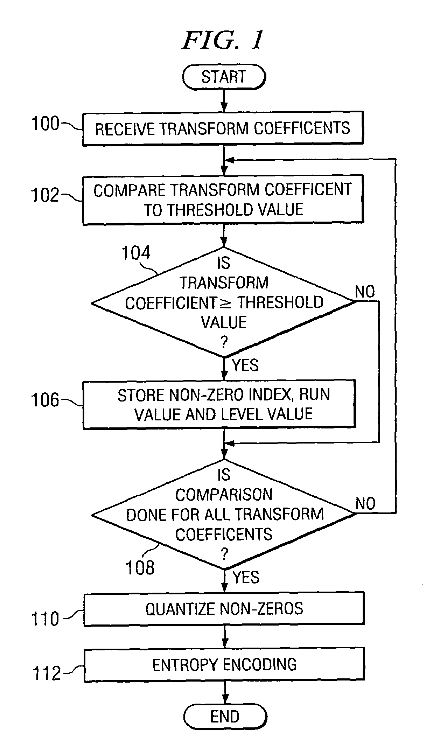

FIG. 1 shows a flow graph of a method for increasing the efficiency of video and picture compression by preprocessing before quantization/inverse quantization in accordance with one or more embodiments of the invention. Initially, transform coefficients are received 100. In at least one embodiment, the transform coefficients may be generated by a Discrete Cosine Transform. In alternative embodiments, the transform coefficients may be generated by other transforms as would be well known in the art, such as, for example, a Fourier Transform or a wavelet transform. For each of the transform coefficients, a comparison 102 is performed between the transform coefficient and a threshold value. The threshold value may depend on the standard that is applied, such as, for example JPEG, MPEG, DV, and H.263, and may be based on an actual quantization value. The comparison 102 is performed to identify non-zero coefficients. If the coefficient is greater than or equal to the threshold, the coefficient divided by the threshold value is greater than zero, and if the coefficient is less than the threshold value, the coefficient divided by the threshold value is equal to zero.

A check 104 is made based on the comparison 102. If the compared coefficient is greater than or equal to the threshold value during comparison 102, a non-zero index is identified and stored, and a RUN value and a LEVEL value are stored 106. The RUN value comprises the number of zero coefficients located in between two non-zero coefficients. The LEVEL value is the location of each non-zero coefficient. The RUN value and LEVEL value are used in variable length encoding or entropy coding after quantization and inverse quantization. If the compared coefficient is not greater than or equal to the threshold value during comparison 102, control passes to 108.

A check 108 is made to determine whether the comparison 102 has been performed on all of the coefficients. If the comparison 102 is not complete for all of the coefficients, the comparison 102 between the threshold value and another coefficient is performed and actions 104-108 are repeated. If the comparison is complete for all of the coefficients, quantization 110 and inverse quantization 111 are performed only on the non-zero coefficients identified, rather than on all of the coefficients. Quantization 110 may be performed using a known quantization algorithm. Alternatively, a standard quantization algorithm may be modified to take advantage of preprocessing for additional computational savings in entropy coding. For example, a standard quantization algorithm may be modified to include additional steps to store RUN and LEVEL values, as described herein, thus simplifying entropy coding. Inverse quantization 111 may also be performed using a known inverse quantization algorithm.

Subsequent entropy encoding 112 occurs in which the RUN and LEVEL values generated and stored during pre-processing are used. Previously, during entropy coding, significant calculations were involved in extracting a new LEVEL and new RUN value in a repeating loop. These additional calculations are not required using systems and methods in accordance with various embodiments because the RUN and LEVEL values are generated and stored during preprocessing for use during entropy coding.

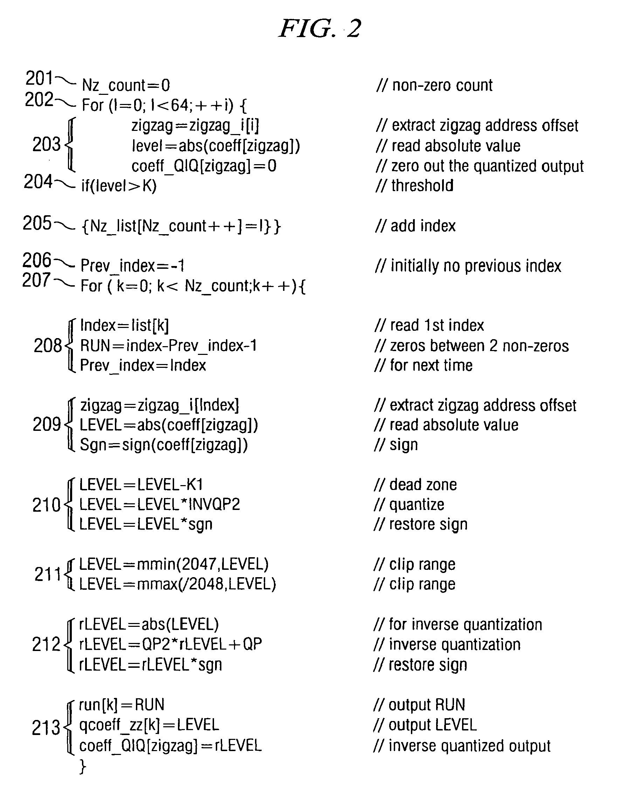

FIG. 2 shows example pseudo-code of an algorithm for increasing the efficiency of video and picture compression by preprocessing before quantization/inverse quantization in accordance with one or more embodiments. In this example, the input coefficients from the table are represented by coeff[64], and present the result from a DCT transform, or another similar transform. During the loop (lines 202 through 205), the zigzag offsets are provided with the table, represented by zigzag_i[64]. During the loop (lines 202 through 205), the inverse quantized values are reset to zero and represented by coeff_QIQ[64], the non-zero indices are represented by NZ_list[64], and the count of non-zero indices is represented by Nz_count.

During a first pass, represented by lines 201 through line 205, the non-zero count is initialized in line 201. For the loop (lines 202 through 205) running over the entire 8x8 table (resulting from the DCT transform or another similar transform), a zigzag operation (as would be well known by one of skill in the art) traverses the table (line 203). In each table location, the absolute value of the coefficient located there is taken and the quantized output is zeroed out (block 203). Also during the loop (lines 202 through 205), for each coefficient in the table, the absolute value of the coefficient is compared to a threshold value K (line 204) to identify non-zero coefficients. K represents a quantization parameter (or QP) based on the chosen standard or algorithm. For example, for an embodiment implementing the MPEG4 standard, K (inter) = 2*QP + QP/2, and K (intra) = 2*QP. Other values may be similarly derived for MPEG2, JPEG, and so on.

For every coefficient in the table that has an absolute value greater than or equal to the threshold value K, a non-zero index is identified, and stored in a list of non-zero indices (line 205).

RUN values are generated (line 206) by initializing a previous index counter for purposes of keeping track of the zeros in between non-zero values. RUN values are used later in entropy coding, and if generated as shown in the pseudo-code, may simplify entropy coding.

Once the first pass is complete and the non-zero coefficients are identified, quantization is performed (lines 207 through 213). For purposes of the quantization loop (lines 207 through 213), the number of indices to be processed is represented by Nz_count; the indices to be processed are represented by list[64]; the coefficients come from the table represented by coeff[64]; the zigzag offsets are provided with the table represented by zigzag_i[64]; the level values are output to qcoeff_zz[64]; the run values are output to run[64]; and the inverse quantized values are output to coeff_QIQ[64].

In the block starting with line 208, a check is made for the number of zeros indexed between non-zero coefficients. The first index is read, and the zero indices between two non-zero indices are counted, and the previous index counter is updated for the next time through the loop. The number of zero indices between two non-zero indices is stored as RUN.

In the block starting with line 209, the zigzag address offset is extracted, the absolute value of the coefficient in the index for the location is determined, and the sign of the coefficient for the index location is stored in order to reconstruct the coefficient later on.

In the block starting with line 210, the quantizing algorithm is applied to the non-zero coefficients identified in the first pass. K1, a quantization parameter, is subtracted from the indexed value LEVEL, the result is multiplied by the inverse of K1, and then the sign, as stored in line 209, is restored to the indexed value LEVEL.

The variables INVQP2, K1, QP2, and K2 are all dependent on which standard or algorithm is chosen. For example, for an embodiment implementing the MPEG4 standard, INVQP2 = 1/ QP * 2, K1 = QP/2, QP2 = QP * 2, and K2 = QP - (QP & 1).

Then clipping (also referred to as saturation) is applied (line 211). Clipping or saturation is used to limit the magnitude of the quantized coefficients. For example, the MPEG4 standard defines this range to [-2048, +2047]. For H263, the range is reduced to [-127, +127] to avoid coding very large values.

In the block starting with line 212, an inverse quantizing algorithm is applied. The inverse quantizing algorithm is not applied to all of the transform coefficients resulting from the DCT transform, but only to the non-zero coefficients indexed during the first pass and quantized. The absolute value of the index value is taken, the absolute value is multiplied by a second quantization parameter QP2 and added to the first quantization parameter QP, and the sign, previously stored (line 209), is restored.

In the block beginning with line 213, the RUN as determined in line 208, the LEVEL as finally determined in line 210, and the inverse quantized output as determined in line 212 are all output. The benefit of outputting RUN and LEVEL values is simplification in the ensuing entropy coding.

Entropy encoding is not shown in FIG. 2, but may be an additional part of the process of data compression. Rather than calculating RUN and LEVEL for the entire table of coefficients after quantization/inverse quantization according to previous methods, RUN and LEVEL may simply be extracted for all k varying from zero to k < Nz_count. This is a much less operation intensive way of obtaining the RUN and LEVEL values for variable length or entropy coding.

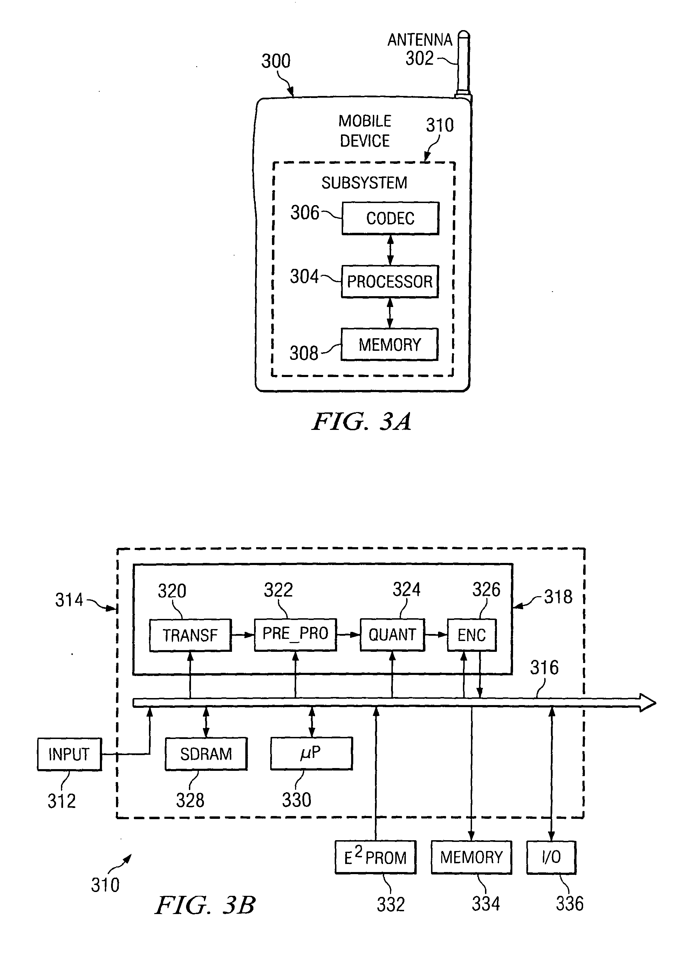

FIG. 3A shows an illustrative architecture for a mobile device 300 that may be used to implement various embodiments. The mobile device 300 includes an antenna 302 for communicating and various components configured to implement data compression. The mobile device 300 may include a processor 304, a codec 306, and a memory 308. Commonly used in this field, codec means coder/decoder or compressor/decompressor. The codec 306 is a device or program capable of performing transformations on a data stream or signal. Codec algorithms may be implemented in hardware or entirely in software, in which case the processor 304 does all of the processing.

The mobile device 300 may be any portable device with an interface configured to connect to a network and to receive or send video or images. Such portable devices include, but are not limited to, a cellular telephone, a personal digital assistant (PDA), a web tablet, a pocket personal computer, a laptop computer, etc.

In embodiments, the mobile device 300 receives an image or video via the antenna 302 or captures an image, by taking a photograph or recording a clip of video. At least one processor 304, codec 306 and at least one memory 308 comprise a subsystem 310 that carries out compression on an image or video.

FIG. 3B is a schematic block diagram of a subsystem 310 in accordance with one or more embodiments. The subsystem 310 includes an image-input unit 312. In at least one embodiment, the image-input unit 312 may comprise a camera capable of capturing a still image or a clip of video. Alternatively, in at least one embodiment, the image-input unit 312 may comprise an input device capable of receiving images or videos through the antenna 302 from a network. The subsystem 310 includes a control unit 314 formed by several blocks that are connected in parallel to a Communication bus 316. The image-input unit 312 outputs the image or video onto the Communication bus 316.

A Compression unit 318 is also connected to the Communication bus 316; the Compression unit 318 receives the image or video and outputs a corresponding compressed image or video compressed according to a particular compression standard algorithm, such as, for example, JPEG, MPEG, DV, and H.263 algorithms. The Compression unit 318 includes a Transform unit 320, a Pre-processing unit 322, a Quantization unit 324, and an Encoder unit 326.

In some embodiments, the Transform unit 320 performs transform encoding by way of a Discrete Cosine Transform. Alternatively, the Transform unit 320 may perform transform encoding by way of, for example, a Fourier Transform or wavelet transform. Each of these transform coding techniques is well known in the art. The Transform unit 320 receives the input image or video and splits it into several blocks of 8x8 pixels. Each block is translated into a group of transform coefficients that represent the spatial frequency of each component of the image or video.

The transform coefficients produced in the Transform unit 320 are provided to the Pre-Processing unit 322. The Pre-Processing unit 322 compares each transform coefficient to a threshold value. The threshold value is determined depending on which compression standard is applied and an actual quantization value. If the transform coefficient is great than or equal to the threshold value, a non-zero index is returned and stored. If the transform coefficient is less than the threshold value, no value is stored. The Pre-processing unit 322 additionally counts the zero coefficients for purposes of determining the RUN value, the number of zero coefficients between non-zero coefficients.

The Quantization unit 324 then performs quantization only on the non-zeros identified by the stored indices, rather than quantizing all of the transform coefficients. This reduces the number calculations required to complete quantization, since the coefficients that would be "zeroed out" during quantization have been previously identified during the pre-processing comparison in the Pre-processing unit 322 and thus do not require actual quantization.

The Quantization unit 324 receives from the communication bus 316 a scaled quantization table consisting of an 8x8 matrix of quantization constants. The non-zero transform coefficients, as indexed, are divided by the corresponding quantization constants and rounded off to the nearest integer. Consequently, the smaller, less significant, high frequency coefficients disappear and the larger, more significant, low frequency coefficients lose unnecessary precision. The values generated by quantization on the non-zero coefficients drastically reduce the amount of information required to represent the digital image.

The Encoder unit 326 performs entropy encoding, or Variable Length Coding (VLC). The Encoder unit 326 receives one or more encoding tables from the communication bus 316. According to standard coding techniques such as, for example, Huffman encoding and arithmetic encoding, each value is encoded such that it is represented by a variable number of bits that is inversely proportional to the statistical frequency of that value. The Encoder unit 326 generates a compressed image (or video) and sends it to the communication bus 316.

The control unit 314 also includes a memory 328, which may be an SDRAM (Synchronous Dynamic Random Access Memory) and a microprocessor (µP) 330, which controls the operation of the device. Additional peripheral units may be connected to the communication bus 316 by means of an interface, including a non-volatile memory 332, such as a flash E2PROM that stores the quantization tables, the encoding tables, and a control program for the microprocessor 330. A memory card 334 may be an additional peripheral unit connected to the communication bus 316, and may be used to store compressed images and video. In addition, the subsystem 310 may include an input/output (I/O) unit 336 consisting of, for example, buttons enabling the user to control the mobile device 300 and a display for supplying data to the user.

The above disclosure is meant to be illustrative of the principles and various embodiments of the present invention. Numerous variations and modifications will become apparent to those skilled in the art once the above disclosure is fully appreciated. For example, although the embodiments described herein were developed in the context of a mobile device, the discussion of the various systems and methods in relation to a mobile device should not be construed as limiting the applicability of the systems and methods described herein to only mobile computing environments. The various systems and methods described herein may be applied to other computing environments as well, including non-mobile computing environments in which more efficient quantization may be desirable. Further, one or more of the actions shown in the method of FIG. 1 can be provided in a different order from that shown and one or more actions may be combined as desired. It is intended that the following claims be interpreted to embrace all such variations and modifications.

## Claims

1. A method for data compression, comprising:
preprocessing the transform coefficients to predict one or more non-zero coefficients and one or more zero coefficients or to predict the non-existence of non-zero or zero coefficients; and
performing a quantization and inverse quantization process on the predicted non-zero coefficients.

2. The method of claim 1, further comprising:
storing indices representing the predicted non-zero coefficients.

3. The method of claim 1 or 2, further comprising:
storing one or more RUN values and one or more LEVEL values.

4. The method of claim 3, further comprising:
performing entropy coding using the values for RUN and the values for LEVEL.

5. The method of any of claims 1 - 4, wherein the preprocessing further comprises:
identifying a non-zero coefficient for each transform coefficient that is greater than a predetermined threshold value; and
identifying a zero coefficient for each transform coefficient that is less than or equal to the predetermined threshold value.

6. A system for compression, comprising:
coding apparatus configured to: preprocess the transform coefficients to identify one or more non-zero coefficients and one or more zero coefficients or to predict the non-existence of non-zero or zero coefficients; and perform a quantization and inverse quantization process on the non-zero coefficients.

7. The system of claim 6, further comprising:
a processor; and
a memory device.

8. The system of claim 6 or 7, wherein the coding apparatus is further configured to preprocess the transform coefficients by:
identifying a non-zero coefficient for each transform coefficient that is greater than a predetermined threshold value; and
identifying a zero coefficient for each transform coefficient that is less than or equal to the predetermined threshold value.

9. The system of claim 6 or 7, wherein the compression component is further configured to perform a quantization process by:
quantizing the non-zero coefficients;
storing one or more RUN values; and
storing one or more LEVEL values.
